# EUROPÄISCHE PATENTSCHRIFT

(11) **EP 3 392 418 B1**
(45) Veröffentlichungstag und Bekanntmachung des Hinweises auf die Patenterteilung: **29.04.2020**
(21) Anmeldenummer: 17167033.4
(22) Anmeldetag: 19.04.2017
(51) Int. Cl.: E03D 11/14, F16B 21/04

(54) **BEFESTIGUNGSSYSTEM**
FASTENING SYSTEM
SYSTÈME DE FIXATION

(43) Veröffentlichungstag der Anmeldung: 24.10.2018
(73) Patentinhaber: Geberit International AG, 8645 Jona (CH)
(72) Erfinder: ZWICKER, Maurus, 8733 Eschenbach (CH)
(74) Vertreter: Frischknecht, Harry Ralph

(56) Entgegenhaltungen:
- EP-A1- 1 538 350
- DE-A1-102014 111 600
- DE-U1-202012 104 847
- US-A- 4 850 778

## Beschreibung

### TECHNISCHES GEBIET

Die vorliegende Erfindung betrifft ein Befestigungssystem für einen Sanitärartikel, insbesondere für eine Sanitärkeramik nach dem Oberbegriff von Anspruch 1.

### STAND DER TECHNIK

Aus der DE 20 2012 104 847 ist eine Befestigungsvorrichtung für Sanitärartikel bekannt geworden. Dabei wird eine Mutter mit einem Winkelgetriebe angetrieben und kann so festgezogen werden.

Nachteilig an der DE 20 2012 104 847 ist die Art der Montage. Der Installateur richtet den typischerweise mehrere Kilogramm wiegenden Sanitärartikel vor der Gewindestange aus. Anschliessend muss der Sanitärartikel in seiner Position gehalten werden und gleichzeitig muss der Installateur die Schraube betätigen. Dieser Vorgang ist für den Installateur sehr mühsam und nicht selten ist es vorgekommen, dass der Sanitärartikel versehentlich fallengelassen wurde, wodurch dieser und ggf. noch weitere Teile, wie ein befliester Boden, zerstört wurden.

Die DE 10 2014 111600 und die EP 1 538 350 zeigen Befestigungselemente im Zusammenhang mit Sanitärarmaturen. Aus diesen Druckschriften ergehen ähnliche Nachteile.

### DARSTELLUNG DER ERFINDUNG

Ausgehend von diesem Stand der Technik liegt der Erfindung eine Aufgabe zugrunde, ein Befestigungssystem anzugeben, welches die Nachteile des Standes der Technik überwindet. Insbesondere soll ein Befestigungssystem, welches die Montage des Sanitärartikels vereinfacht.

Diese Aufgabe löst ein Befestigungssystem von Anspruch 1. Demgemäss umfasst ein Befestigungssystem für einen Sanitärartikel eine Gewindemutter mit einem sich um eine Mittelachse erstreckenden Innengewinde für den Eingriff mit einer Gewindestange und eine Lagerungseinheit umfassend ein Antriebselement zur Betätigung der Gewindemutter und ein Aufnahmeelement zur Aufnahme des Sanitärartikels. Das Antriebselement wirkt auf die Gewindemutter und die Gewindemutter wird mit einer Drehbewegung beaufschlagt. Die Gewindemutter und das Antriebselement stehen über eine Verrieglungsmechanik miteinander in Verbindung, wobei die Verrieglungsmechanik derart ausgebildet ist, dass durch eine Montagebewegung der Lagerungseinheit in Richtung der Mittelachse werkzeuglos ein mechanischer Eingriff zwischen Gewindemutter und Antriebselement bereitstellbar ist. Die Verriegelungsmechanik umfasst mindestens eine Kurvenbahn und mindestens ein in die Kurvenbahn eingreifender Nocken. Der Nocken arbeitet dabei mit der Kurvenbahn im Sinne der obigen Beschreibung zusammen. Hierzu ragt der Nocken in die Kurvenbahn ein.

Die Bereitstellung eines Eingriffs bzw. einer Verriegelung zwischen der Gewindemutter und dem Antriebselement erlaubt eine Befestigung zwischen der Lagerungseinheit und der Gewindemutter. Somit kann der Sanitärinstallateur ohne Zuhilfenahme eines Werkzeuges den zu befestigenden Sanitärartikel während der Montage vor dem Erstellen der eigentlichen Befestigung über die Verriegelungsmechanik einhängen. Diese Art der Vorab-Befestigung weist den Vorteil auf, dass der Sanitärartikel mit beiden Händen platziert werden kann und erst anschliessend nach erfolgter Platzierung das Antriebselement mit einem Werkzeug angetrieben werden muss. Insofern entfällt die aufwändige und schwierige Montage.

Unter der Ausdrucksweise "werkzeuglos" wird verstanden, dass die Verriegelungsmechanik zwischen der Gewindemutter und dem Antriebselement ohne Zuhilfenahme eines Werkzeuges hergestellt werden kann.

Vorzugsweise ist die Gewindemutter auf der Gewindestange vormontiert und das Lagerungselement steht in mechanisch fester Verbindung mit dem Sanitärartikel. Die Gewindemutter ist dabei um die Mittelachse drehbar und das Lagerungselement wird entlang der Montagebewegung, welche eine Längsbewegung ist, entlang der Gewindestange bewegt.

Die Verriegelungsmechanik ist vorzugsweise aufgeteilt, wobei Teile der Verriegelungsmechanik an der Gewindemutter angeordnet sind und wobei andere Teile am Antriebselement angeordnet sind.

Vorzugsweise verriegelt der mechanische Eingriff die Gewindemutter und das Antriebselement bezüglich einer Drehung um die Mittelachse drehfest zueinander. Vorzugsweise verriegelt der mechanische Eingriff die Gewindemutter und das Antriebselement bezüglich einer Längsbewegung gegen die Montagebewegung zueinander. Das heisst, es kann über den Eingriff eine Drehbewegung vom Antriebselement auf die Gewindemutter übertragen werden. Durch die Blockierung gegen die Montagebewegung wird während der Verriegelung sichergestellt, dass sich die Verriegelung nicht gegen die Montagebewegung unabsichtlich löst und dass im montierten Zustand durch diesen Kontakt ein Anschlag für das Antriebselement bereitgestellt wird.

Besonders bevorzugt ist die Verriegelungsmechanik eine Push-Push-Mechanik oder eine Herzkurvenmechanik.

Unter einer "Push-Push-Mechanik" bzw. einer "Herzkurvenmechanik" wird eine Mechanik verstanden, welche bei Bewegung in eine Richtung ein Eingriff zwischen Antriebselement und Gewindemutter herstellt und bei einer erneuten Bewegung in die gleiche Richtung, die Verriegelung wieder aufhebt.

Vorzugsweise wird bei der Montagebewegung die Gewindemutter um die Mittelachse verschwenkt, während die Lagerungseinheit im Wesentlichen ausschliesslich entlang der Mittelachse bewegt wird. Bei der Verschwenkung handelt es sich im Wesentlichen um eine Verschwenkung um einen Teilwinkel einer vollen Umdrehung. Die Gewindemutter selbst steht aufgrund der Verbindung mit der Gewindestange bezüglich einer Längsbewegung in Richtung der Mittelachse während der Montage im Wesentlichen fest. Im "Wesentlichen fest" heisst, dass die Gewindemutter sich abgesehen von der kleinen Längsbewegung aufgrund des Zusammenwirkens zwischen der besagten Verschwenkung und der Steigung nur in diesem Rahmen bewegen kann.

Vorzugsweise umfasst die Gewindemutter eine zylindrische sich um die Mittelachse herum erstreckende Aussenwand und das Antriebselement einen Hohlraum mit einer zylindrischen Innenwand. Vorzugsweise ragt die Gewindemutter mit ihrer Aussenwand mindestens teilweise in den Hohlraum ein. Die Verriegelungsmechanik ist im Bereich des Hohlraums bzw. im Bereich der besagten Innenwand und/oder der Aussenwand angeordnet.

Die Kurvenbahn weist für die Zusammenarbeit mit dem Nocken diverse Seitenflächen auf, welche nicht notwendigerweise alle miteinander verbunden sind. Insofern kann die Kurvenbahn als nicht vollständig geschlossene Rille ausgebildet sein.

Vorzugsweise entspricht die Zahl der Nocken der Zahl der Kurvenbahnen.

In einer ersten bevorzugten Ausführungsform erstreckt sich die Kurvenbahn in die zylindrische Aussenwand der Gewindemutter hinein und der Nocken ist auf der Innenwand des Antriebselementes angeordnet. Das heisst, die Kurvenbahn erstreckt sich von der zylindrischen Aussenwand der Gewindemutter in die Seitenwand der Gewindemutter hinein. Bezüglich der Nocken heisst dies, dass sich die Nocke von der zylindrischen Innenwand des Antriebselementes weg erstreckt.

In einer zweiten bevorzugten Ausführungsform ist die Nocke auf der zylindrischen Aussenwand der Gewindemutter und die Kurvenbahn erstreckt sich in die Innenwand des Antriebselementes hinein. Das heisst, die Nocke erstreckt sich von einer zylindrischen Aussenwand der Gewindemutter weg. Bezüglich der Kurvenbahn heisst dies, dass sich die Kurvenbahn von einer zylindrischen Innenwand des Antriebselementes in das Antriebselement sich hinein erstreckt.

Vorzugsweise weist die Kurvenbahn einen Einführabschnitt, einen Umschaltabschnitt und einen Lagerungsabschnitt auf, wobei der Nocken beim Vorgang des Verbindens entlang der Montagebewegung zuerst den Einführabschnitt passiert und dann auf den Umschaltabschnitt auftrifft, welcher die Gewindemutter derart verschwenkt, dass bei einer Längsbewegung der Lagerungseinheit entgegen der Montagebewegung der Nocken in den Lagerungsabschnitt zu liegen kommt. Der mechanische Eingriff ist dann bereitgestellt, wenn der Nocken in der Lagerungseinheit liegt.

Über eine derart ausgebildete Kurvenbahn kann eine einfache Push-Push-Verriegelungsmechanik bereitgestellt werden.

Der Umschaltabschnitt liegt bezüglich der Montagebewegung gesehen am hinteren Ende gegenüber des Einführabschnittes. Vorzugsweise liegt der Lagerungsabschnitt in Richtung der Montagebewegung gesehen zwischen dem Einführabschnitt und dem Umschaltabschnitt.

Vorzugsweise ist der Einführabschnitt seitlich durch zwei Führungsflächen begrenzt, wobei der Abstand zwischen den zwei Führungsflächen mit geringer werdendem Abstand zum Umschaltabschnitt kleiner wird. Durch die beiden winklig geneigt zueinander verlaufenden Führungsflächen kann ein gutes Einschieben des Nockens erreicht werden.

Vorzugsweise sind die Führungsflächen von zwei benachbarten Kurvenbahnen derart angeordnet, dass die besagten Führungsflächen in einer Spitze gegenüber dem Lagerungsabschnitt zusammenlaufen. Mit der Spitze kann das Einführen des Nockens in die Kurvenbahn weiter vereinfacht werden.

Vorzugsweise trifft der Nocken bei einer Bewegung des Nockens aus dem Lagerungsabschnitt heraus in Richtung der Montagebewegung auf einen weiteren Umschaltabschnitt auf, welcher in Zusammenarbeit mit dem Nocken die Gewindemutter weiter verschwenkt, so dass der Nocken derart zum Einführabschnitt liegt, dass dieser durch den Einführabschnitt gegen die Montagerichtung die Kurvenbahn verlassen kann.

Besonders bevorzugt sind mindestens zwei Kurvenbahnen und mindestens zwei Nocken angeordnet, wobei die Paarungen Kurvenbahn und Nocken vorzugsweise jeweils in gleichmässigen Abständen um den Umfang der Gewindemutter verteilt angeordnet sind. Bei zwei Paarungen Nocken/Kurvenbahn liegen die Paarungen in einem Winkel von 180° um den Umfang versetzt.

Vorzugsweise ist der Nocken frontseitig in seiner Form passend zum Lagerungsabschnitt ausgebildet. Vorzugsweise weist der Nocken rückseitig eine zur Mittelachse winklig geneigte Steuerfläche auf, welche mit dem Umschaltabschnitt bzw. mit dem weiteren Umschaltabschnitt zusammenarbeitet.

Vorzugsweise umfasst die Lagerungseinheit weiter ein Gehäuse, welches Teil des Aufnahmeelementes ist, wobei das Antriebselement um eine Drehachse drehbar im Gehäuse und bezüglich einer Längsbewegung entlang der Drehachse fest im Gehäuse gelagert ist.

Vorzugsweise umfasst das Befestigungssystem weiterhin ein Betätigungselement, wobei das Antriebselement durch ein Betätigungselement mit einer Drehbewegung beaufschlagt wird. Das Betätigungselement ist vorzugsweise im Gehäuse gelagert.

Vorzugsweise ist zwischen Antriebselement und Betätigungselement ein Zahngetriebe, insbesondere ein Kegelgetriebe, vorgesehen. Das Kegelgetriebe hat den Vorteil, dass die Drehachse für die Betätigung des Betätigungselementes winklig geneigt, insbesondere rechtwinklig zur besagten Mittelachse steht.

Vorzugsweise erstreckt sich das Innengewinde nicht über die gesamte Länge der Gewindemutter. Das heisst, der zylindrische Hohlraum der Gewindemutter, durch welchen sich die Gewindestange hindurch erstreckt, weist zusätzlich Innengewinde einen Abschnitt auf, welcher ohne Gewinde ausgebildet ist. Vorzugsweise ist das Innengewinde im Wesentlichen im Bereich des besagten Lagerungsabschnittes angeordnet.

Ein Sanitärsystem umfasst mindestens ein Befestigungssystem nach obiger Beschreibung, pro Befestigungssystem eine Gewindestange, die gebäudeseitig fixiert ist und einen Sanitärartikel, wie beispielsweise ein Urinal, eine Klosettschüssel oder ein Waschtisch. Die Gewindestange kann beispielsweise mit einem Montagerahmen verbunden werden.

Ein Verfahren zur Montage eines Sanitärartikels mit einem Befestigungssystem nach obiger Beschreibung ist dadurch gekennzeichnet,
dass in einem ersten Schritt die Gewindemutter auf einer Gewindestange platziert wird,
dass in einem zweiten Schritt die Lagerungseinheit mit dem mit der Lagerungseinheit in Verbindung stehenden Sanitärartikel entlang der Montagebewegung über die Verrieglungsmechanik mit der Gewindemutter in Verbindung gebracht wird,
und dass in einem dritten Schritt über das Antriebselement eine Drehbewegung auf die Gewindemutter übertragen wird, wodurch die Lagerungseinheit entlang der Gewindestange bewegt wird und wodurch der Sanitärartikel gegen einen Anschlag, wie eine Wand, klemmbar ist.

Vorzugsweise passiert im zweiten Schritt während der Montagebewegung der Nocken den Einführabschnitt und trifft in Richtung der Montagebewegung gesehen gegenüber des Einführabschnittes auf den Umschaltabschnitt auf und kommt dann mittels einer Bewegung entgegen der Montagebewegung in den Lagerungsabschnitt zu liegen.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Befestigungssystem nach einer Ausfuhrungsform der vorliegenden Erfindung;
- Fig. 2: eine Explosionsdarstellung des Befestigungssystems nach der Figur 1;
- Fig. 3: eine Draufsicht auf das Befestigungssystem nach Figur 1;
- Fig. 4a: eine Schnittdarstellung entlang der Schnittlinie III-III der Figur 3;
- Fig. 4b: eine weitere Schnittdarstellung entlang der Schnittlinie III-III der Figur 3;
- Fig. 5: eine weitere perspektivische Ansicht von Teilen des Befestigungssystems;
- Fig. 6a-6d: die Bewegung von Teilen des Befestigungssystem während der Verriegelung;
- Fig. 7: die verriegelte Position der in Figur 6 gezeigten Teile; und
- Fig. 8a-8d: die Bewegung von Teilen des Befestigungssystem während der Entriegelung.

### BESCHREIBUNG BEVORZUGTER AUSFÜHRUNGSFORMEN

In den Figuren wird eine Ausführungsform eines Befestigungssystems 1 für einen Sanitärartikel gezeigt. Das Befestigungssystem 1 dient der Befestigung eines Sanitärartikels an einem Montagesystem, von welchem eine Gewindestange 4 absteht. Die Gewindestange 4 ist dabei gebäudeseitig, beispielsweise an einem Montagerahmen, angeordnet, und steht in den Raum ab, in welchem der Sanitärartikel zu befestigen ist.

Der Sanitärartikel kann beispielsweise ein Urinal, eine Klosettschüssel, oder ein Waschtisch sein und ist in den Figuren nicht dargestellt.

Das Befestigungssystem 1 umfasst eine Gewindemutter 2 und eine Lagerungseinheit 5. Die Gewindemutter 2 umfasst ein sich um eine Mittelachse M erstreckendes Innengewinde 3 für den Eingriff mit der Gewindestange 4. Die Lagerungseinheit 5 umfasst ein Antriebselement 6 zur Betätigung der Gewindemutter 2 und ein Aufnahmeelement 7 zur Aufnahme des Sanitärartikels. Über das Antriebselement 6 kann eine Drehung auf die Gewindemutter 2 beaufschlagt werden, sodass die Gewindemutter auf der feststehenden Gewindestange 4 entsprechend gedreht werden kann. Aufgrund der Zusammenwirkung zwischen Gewindemutter 2 und Gewindestange 4 bewegt sich die Gewindemutter 2 bei Drehung derselben in Richtung der Mittelachse M fort. Das Antriebselement 6 wirkt also auf die Gewindemutter 2 und beaufschlagt diese mit einer Drehbewegung.

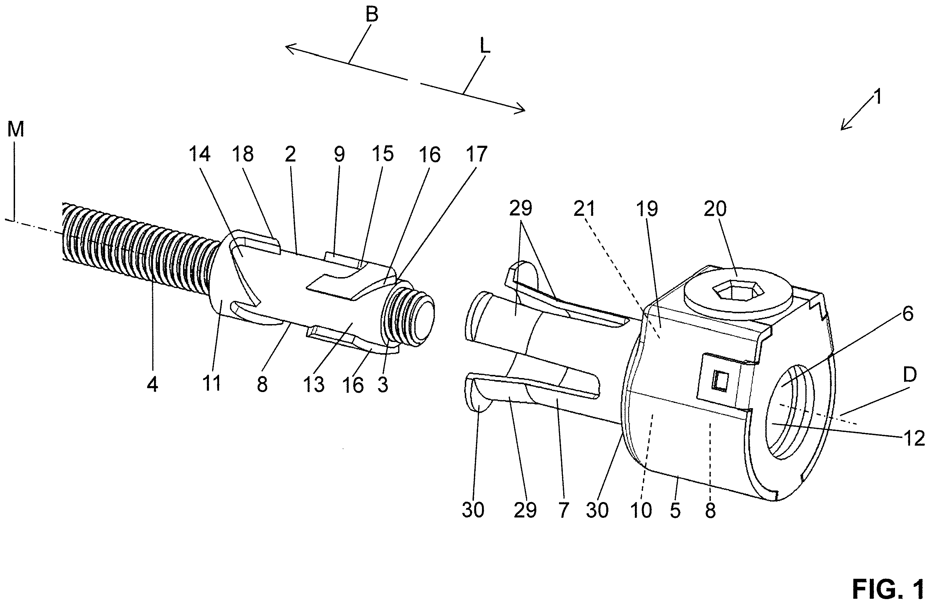

Das Antriebselement 6 wird in der Figur 1 in einem Gehäuse 19 gezeigt. Dabei kann das Antriebselement 6 in der gezeigten Ausführungsform über ein Betätigungselement 20 entsprechend angetrieben werden.

In der gezeigten Ausführungsform bilden das Aufnahmeelement 7 für den Sanitärartikel und das Gehäuse 19 eine einstückige Struktur. Das heisst, das Aufnahmeelement 7 ist Teil des Gehäuses 19.

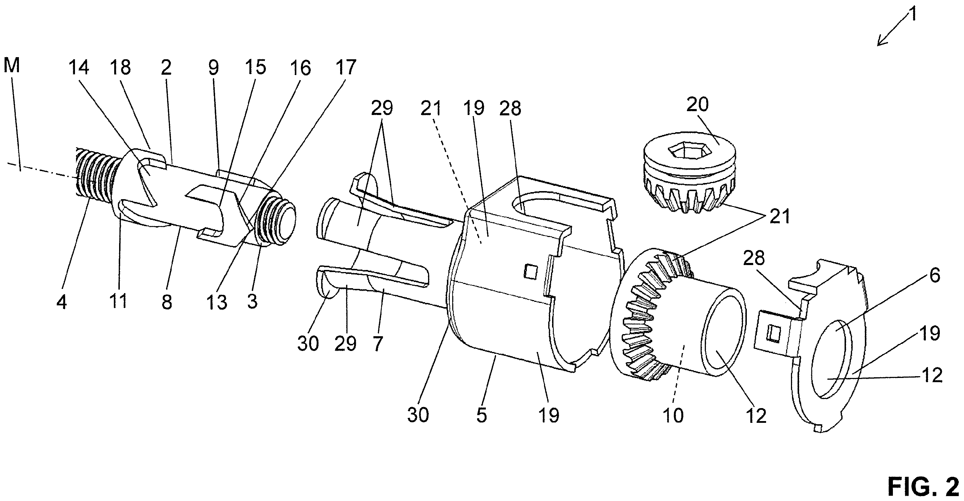

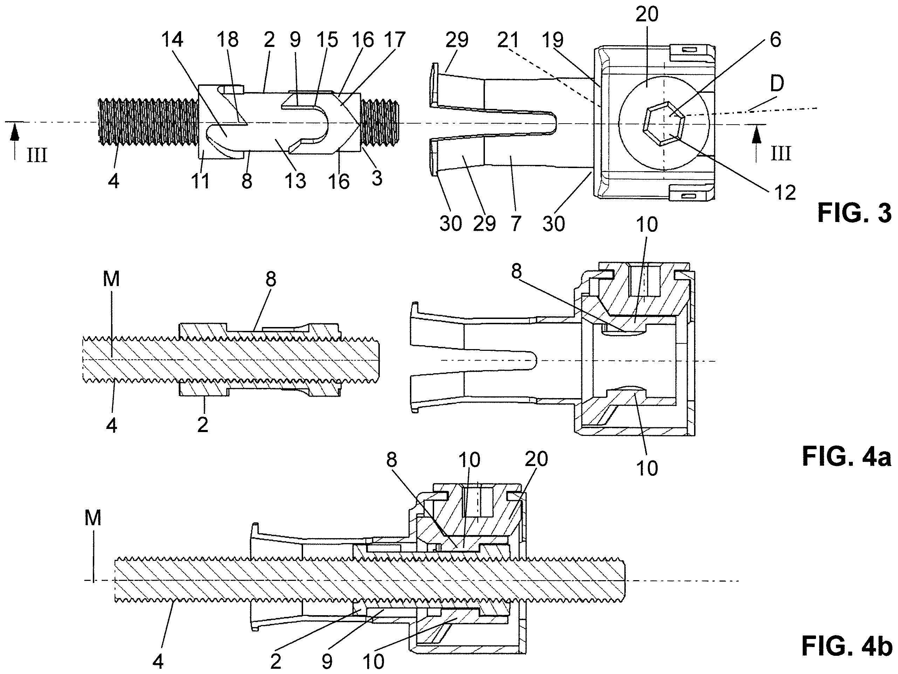

In der Figur 2 wird eine Explosionsdarstellung des Befestigungssystems 1 gemäss der Figur 1 gezeigt. In der Figur 3 wird eine Draufsicht des Befestigungssystems gezeigt und die Figuren 4a/4b zeigen Schnittdarstellungen entlang der Schnittlinie III-III von der Figur 3. Anhand der Figuren 2 bis 4b wird nun die Verbindung zwischen der Gewindemutter 2 und dem Antriebselement 6 genauer erläutert.

Die Gewindemutter 2 und das Antriebselement 6 stehen über eine Verriegelungsmechanik 8 miteinander in Verbindung. Die Verriegelungsmechanik 8 ermöglicht ein mechanischer Eingriff zwischen der Gewindemutter 2 und dem Antriebselement 6. Die Teile der Verriegelungsmechanik 8 sind dabei an der Gewindemutter 2 und Teile am Antriebselement 6 angeordnet. Die Verriegelungsmechanik 8 ist dabei derart ausgebildet, dass durch eine Montagebewegung B der Lagerungseinheit 5 in Richtung der Mittelachse M in werkzeugloser Art und Weise ein mechanischer Eingriff bzw. eine mechanische Verriegelung zwischen Gewindemutter 2 und Antriebselement 6 bereitstellbar ist. Das heisst mit anderen Worten, dass die Verriegelungsmechanik 8 derart ausgebildet ist, dass die Gewindemutter 2 und das Antriebselement 6 ohne Zuhilfenahme eines Werkzeuges miteinander verbindbar sind. Für die Montage des Sanitärartikels heisst dies, dass der Installateur die Gewindemutter 2 auf die Gewindestange 4 anordnen kann und dann im Sinne einer Vormontage das Befestigungssystem 1 zusammen mit dem Sanitärartikel mit der Gewindemutter 2 mechanisch verbinden kann. Anschliessend kann der Installateur dann über das Betätigungselement 20 das Antriebselement 6 betätigen, welches dann die Gewindemutter 2 in relative Drehung zur Gewindestange 4 versetzt. Durch diesen anschliessenden Schritt wird das Befestigungssystem 1 festgezogen.

Der besagte mechanische Eingriff der Verriegelungsmechanik 8 ist dabei derart ausgebildet, dass die Verriegelung drehfest um die Mittelachse M ist. Das heisst, dass eine Drehung vom Antriebselement 6 auf die Gewindemutter 2 übertragbar ist. In der gezeigten Ausführungsform wird dies durch einen Lagerungsabschnitt 15, in welchen ein Nocken 10 einragt, bereitgestellt. Der Lagerungsabschnitt 15 ist dabei Teil der Gewindemutter 2 und der Nocken 10 ist Teil des Antriebselementes 6. Die Konfiguration kann auch umgekehrt sein. Des Weiteren ist der mechanische Eingriff derart ausgebildet, dass zwischen dem Antriebselement 6 und der Gewindemutter 2 eine Bewegung entlang der Längsbewegung L, die gegen die Montagebewegung B orientiert ist, verunmöglicht ist. In der gezeigten Ausführungsform wird dieser wiederrum durch die Kombination Nocken 10 und Lagerungsabschnitt 15 gelöst. Der Lagerungsabschnitt 15 steht dabei einen entsprechenden Anschlag für den Nocken 10 bereit.

Die Verriegelungsmechanik 8 ist vorzugsweise derart ausgebildet, dass bei der Montagebewegung B des Antriebselementes 6 gemeinsam mit der Lagerungseinheit 5 die Gewindemutter 2 um die Mittelachse M leicht verschwenkt wird, während die Lagerungseinheit 5 im Wesentlichen ausschliesslich entlang der Mittelachse M bewegt wird. Die leichte Verschwenkung hat den Vorteil, dass die Verriegelungsmechanik 8 entsprechend aktiviert werden kann. Die Montagebewegung B der Lagerungseinheit 5 wird bezüglich der auf der Gewindestange 4 im wesentlichen feststehenden Gewindemutter 2 ausgeführt.

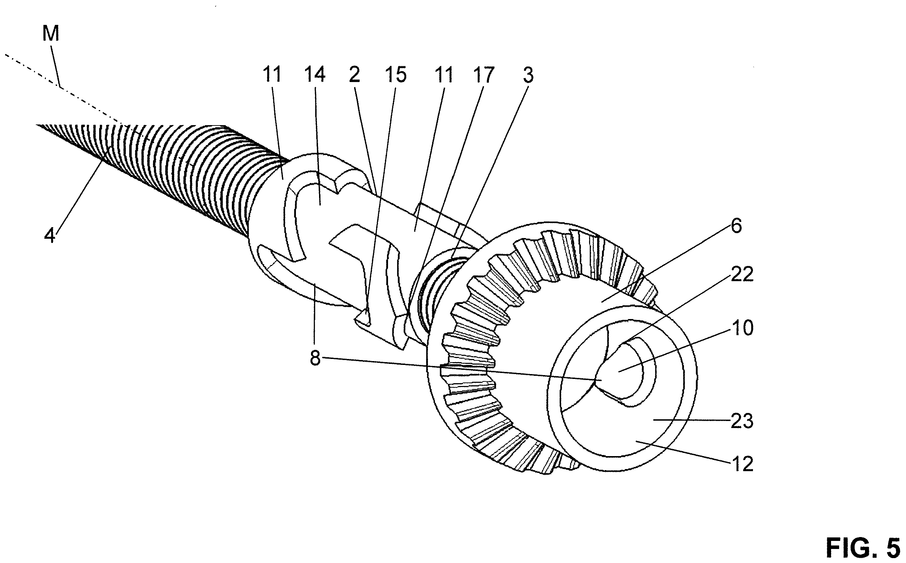

Von den Figuren 2 bis 5 kann gut erkannt werden, dass die Gewindemutter 2 eine zylindrische sich um die Mittelachse M ersteckende Aussenwand 11 aufweist. Innenseitig ist das Innengewinde 3 angeordnet. Das Antriebselement 6 weist einen Hohlraum 23 auf, welcher eine zylindrische Innenwand 12 umfasst. In der montierten Stellung ragt die Gewindemutter 2 mit ihrer Aussenwand 11 mindestens teilweise in den Hohlraum 23 des Antriebselementes 6 ein. Die besagte Verriegelungsmechanik 8 ist im Bereich des Hohlraums 23, also im Bereich der besagten Innenwand 12 beziehungsweise der Aussenwand 11 angeordnet.

Die Verriegelungsmechanik 8 ist vorzugsweise eine Push-Push-Mechanik bzw. eine Herzkurvenmechanik. Die konkrete Ausbildung in den gezeigten Ausführungsformen wird in der Folge erläutert.

Die Verriegelungsmechanik 8 umfasst in der gezeigten Ausführungsform eine Kurvenbahn 9 und mindestens ein in die Kurvenbahn 9 eingreifenden Nocken 10. Die Kurvenbahn 9 erstreckt sich in der gezeigten Ausführungsform in die zylindrische Aussenwand 11 der Gewindemutter 2 hinein. Der Nocken 10 ist auf der Innenwand 12 des Antriebselementes 6 angeordnet und erstreckt sich von dieser Weg. In der gezeigten Ausführungsform sind zwei Nocken 10 bezüglich der Mittelachse M gegenüberliegend zueinander angeordnet. Gleichermassen sind zwei Kurvenbahnen 9 bezüglich der Mittelachse M gegenüberliegend zueinander angeordnet. Die Paarung Kurvenbahn 9/Nocken 10 liegt auf einer 180°-Teilung.

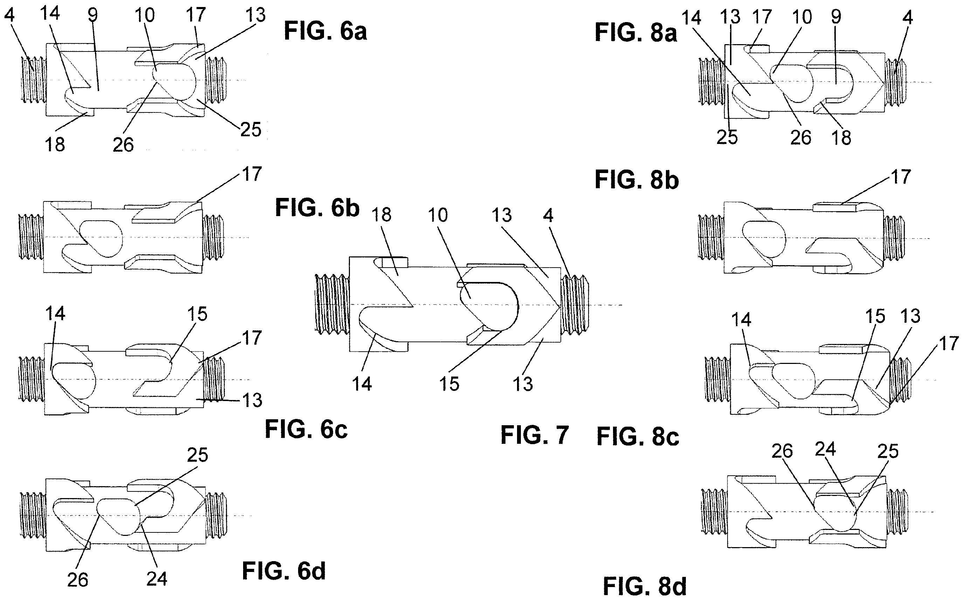

Die Kurvenbahn 9 weist einen Einführabschnitt 13, einen Umschaltabschnitt 14 und den oben beschriebenen Lagerungsabschnitt 15 auf. Anhand der Figuren 6a bis 6d wird nun die Verbindung zwischen der Gewindemutter 2 und dem Antriebselement 6 über die Verriegelungsmechanik 8 mit der Kurvenbahn 9 und dem Nocken 10 genauer erläutert. Der Nocken 10 bewegt sich beim Vorgang des Verbindens entlang der Montagebewegung B zuerst durch den Einführabschnitt 13, sowie dies in der Figur 6a gezeigt ist. Der Nocken 10 wird durch den Einführabschnitt 13 in die Kurvenbahn 9 eingeführt und bewegt sich fortan in der Kurvenbahn 9. Bei der weiteren Ausführung der Montagebewegung B trifft der Nocken 10 sodann auf den Umschaltabschnitt 14, so wie dies in der Figur 6b gezeigt ist, auf. Aufgrund der Ausbildung des Umschaltabschnittes 14 wird die Gewindemutter 2 bezüglich der feststehenden Gewindestange 4 und bezüglich des feststehenden Antriebselementes 6 verschwenkt, wobei der Nocken 10 bezüglich der Kurvenbahn 9 seine hinterste Lage im Umschaltabschnitt 14 einnimmt. Dies wird in der Figur 6c gezeigt. Sodann wird eine Bewegung entgegen der Montagebewegung ausgeführt und der Nocken 10 gleitet in den Lagerungsabschnitt 15 ein. In der gezeigten Ausführungsform trifft der Nocken 10 auf eine dem Lagerungsabschnitt 15 vorgelagerten Leitfläche 24 auf und wird sodann in den Lagerungsabschnitt 15 geleitet.

In der Figur 7 befindet sich der Nocken 10 im Lagerungsabschnitt 15 wobei der Nocken 10 dann derart im Lagerungsabschnitt 15 liegt, dass eine Drehbewegung zwischen Gewindemutter 2 und Antriebselement 6 sowie eine Längsbewegung zwischen Gewindemutter 2 und Antriebselement 6 gegen die Montagebewegung B verhindert werden kann.

In der in Figur 7 gezeigten Lage ist die Verriegelungsmechanik 8 entsprechend im Eingriff und der Installateur kann über das Betätigungselement 20 eine Drehbewegung auf das Antriebselement 6 beaufschlagen, welches dann über die Verbindung zwischen Nocken 10 und Lagerungsabschnitt 15 eine Drehbewegung auf die Gewindemutter 2 ergibt, welche sich dann um und entlang der Mittelachse M auf der Gewindestange 4 fortbewegt.

Der Einführabschnitt 13 ist seitlich durch zwei Führungsflächen 16 begrenzt. Der Abstand zwischen diesen beiden Führungsflächen 16 nimmt mit geringer werdendem Abstand zum Umschaltabschnitt 14 ab. Das heisst die beiden Führungsflächen 16 sind winklig geneigt zueinander und stellen für den Nocken 10 eine vorteilhafte Konfiguration bereit, so dass der Nocken 10 möglichst einfach in die Kurvenbahn 9 eingeschoben werden kann.

In der gezeigten Ausführungsform sind die Führungsflächen von den beiden benachbarten Kurvenbahnen 9 derart angeordnet, dass die Führungsflächen 16 in eine Spitze 17 gegenüber des Lagerungsabschnittes 15 zusammenlaufen. Die Bereitstellung dieser Spitze 17 hat den Vorteil, dass sich bei der Vorpositionierung des Nockens 10 bei Beginn der Einführabschnittes 13 die Gewindemutter 2 einfach drehen kann und der Nocken 10 möglichst gut in die Kurvenbahn 9 findet.

In der gezeigten Ausführungsform weist der Nocken 10 eine gerundete Frontfläche 25 auf. Die Fläche des Lagerungsabschnittes 15, in welche die Frontfläche 25 zu liegen kommt ist dabei ebenfalls gerundet ausgebildet. Weiter weist der Nocken 10 eine geneigte ausgebildete Führungsfläche 26 auf, welche rückwärtig angeordnet ist. Die Führungsfläche 26 dient im Wesentlichen der Zusammenarbeit mit dem Umschaltabschnitt 14 der Kurvenbahn 9.

Anhand der Figuren 8a bis 8d wird nun die Aufhebung der Verriegelungsverbindung 8 genauer gezeigt. Bei der Aufhebung des Befestigungssystem 1 löst der Installateur über das Betätigungselement 20, das auf das Antriebselement 6 wirkt, die feste Verbindung auf der Gewindestange 4 entsprechend, so dass das Befestigungssystem 1 relativ zur feststehenden Gewindemutter 2 auf die Gewindestange 4 verschoben werden kann. In einem ersten Schritt, so wie in der Figur 8a dargestellt, wird sodann der Sanitärartikel gemeinsam mit der Lagerungseinheit 6 in Richtung eines weiteren Umschaltabschnittes 18 geschoben. Dabei entfernt sich der Nocken 10 aus dem Lagerungsabschnitt 15. Bei Auftreffen des Nockens 10 auf den weiteren Umschaltabschnitt 18 wird in Zusammenarbeit mit dem Nocken 10 die Gewindemutter 2 weiter verschwenkt. Dies wird in der Figur 8b gezeigt. Der Nocken 10 kommt dann, so wie in der Figur 8c gezeigt in einen Bereich zu liegen, dass der Nocken 10 derart zum Einführabschnitt 13 liegt, dass dieser durch den Einführabschnitt 13 gegen die Montagerichtung B die Kurvenbahn 9 verlassen kann. Dies wird in der Figur 8d dargestellt. In der gezeigten Ausführungsform ist eine weitere Führungsfläche 26 angeordnet, welche dem Nocken 10 den Eintritt in den Einführabschnitt 13 erleichtert.

Anhand der Figur 2 werden nun weitere Details im Zusammenhang mit der Lagerungseinheit 5 erläutert. Wie bereits erwähnt umfasst die Lagerungseinheit 5 in der gezeigten Ausführungsform ein Gehäuse 19. Das Gehäuse 19 bildet dabei einen Teil des Aufnahmeelementes 7. Das Antriebselement 6 ist um eine Drehachse D drehbar im Gehäuse 19 gelagert und bezüglich einer Längsbewegung entlang dieser Drehachse ist das Antriebselement 6 fest im Gehäuse gelagert. Hierzu umfasst das Gehäuse 19 entsprechende Anschlagsflächen 28. Weiter ist im Gehäuse das Betätigungselement 20 gelagert, mit welchem das Antriebselement 6 mit einer Drehbewegung beaufschlagbar ist. Für die Übertragung der Drehbewegung ist zwischen dem Antriebselement 6 und dem Betätigungselement 20 ein Zahngetriebe 21 vorgesehen. Die Zähne sind dabei integraler Bestandteil der jeweiligen Elemente. Das Zahngetriebe 21 hat in der gezeigten Ausführungsform eines Kegelgetriebes bzw. eines Winkelgetriebes. Das heisst die Drehachse des Betätigungselementes 20 steht winklig geneigt, die rechtwinklig zur Achse D des Antriebselementes 6. Die Drehachse D des Antriebselementes 6 ist in der montierten Stellung kollinear zur Mittelachse M der Gewindestange 4 beziehungsweise des Innengewindes 3.

Das Aufnahmeelement 7, welches hier integraler Bestandteil des Gehäuses 19 ist, umfasst mehrere Lagerlaschen 29, welche sich vom Gehäuse 19 wegerstrecken. Der Sanitärartickel wird dabei an diesen Lagerlaschen 29 gelagert. Des Weiteren umfasst das Gehäuse eine äussere Anschlagsfläche 30, welche ebenfalls mit dem Sanitärartikel in Kontakt kommt und diesen in Gebrauchszustand gegen eine Wand klemmt.

**BEZUGSZEICHENLISTE**

| | | | |
|---|---|---|---|
| 1 | Befestigungssystem | | |
| 2 | Gewindemutter | 28 | Anschlagsfläche |
| 3 | Innengewinde | 29 | Lagerlaschen |
| 4 | Gewindestange | 30 | äussere Anschlagsfläche |
| 5 | Lagerungseinheit | | |
| 6 | Antriebselement | D | Drehachse |
| 7 | Aufnahmeelement | M | Mittelachse |
| 8 | Verriegelungsmechanik | B | Montagebewegung |
| 9 | Kurvenbahn | L | Längsbewegung |
| 10 | Nocken | | |
| 11 | Aussenwand | | |
| 12 | Innenwand | | |
| 13 | Einführabschnitt | | |
| 14 | Umschaltabschnitt | | |
| 15 | Lagerungsabschnitt | | |
| 16 | Führungsflächen | | |
| 17 | Spitze | | |
| 18 | weiterer Umschaltabschnitt | | |
| 19 | Gehäuse | | |
| 20 | Betätigungselement | | |
| 21 | Zahngetriebe | | |
| 23 | Hohlraum | | |
| 24 | Leitfläche | | |
| 25 | gerundete Frontfläche | | |
| 26 | Führungsfläche | | |

## Patentansprüche

1. Befestigungssystem (1) für einen Sanitärartikel umfassend
eine Gewindemutter (2) mit einem sich um eine Mittelachse (M) erstreckenden Innengewinde (3) für den Eingriff mit einer Gewindestange (4) und
eine Lagerungseinheit (5) umfassend ein Antriebselement (6) zur Betätigung der Gewindemutter (2) und ein Aufnahmeelement (7) zur Aufnahme des Sanitärartikels,
wobei das Antriebselement (6) auf die Gewindemutter (2) wirkt und die Gewindemutter (2) mit einer Drehbewegung beaufschlagt,
wobei die Gewindemutter (2) und das Antriebselement (6) über eine Verrieglungsmechanik (8) miteinander in Verbindung stehen, wobei die Verrieglungsmechanik (8) derart ausgebildet ist, dass durch eine Montagebewegung (B) der Lagerungseinheit (5) in Richtung der Mittelachse (M) werkzeuglos ein mechanischer Eingriff zwischen Gewindemutter (2) und Antriebselement (6) bereitstellbar ist, **dadurch gekennzeichnet, dass**
dass die Verriegelungsmechanik (8) mindestens eine Kurvenbahn (9) und mindestens einen die Kurvenbahn (9) eingreifenden Nocken (10) umfasst.

2. Befestigungssystem (1) nach Anspruch 1, **dadurch gekennzeichnet, dass** der besagte mechanische Eingriff die Gewindemutter (2) und das Antriebselement (6) um die Mittelachse (M) drehfest verriegelt und/oder dass der besagte mechanische Eingriff die Gewindemutter (2) und das Antriebselement (6) bezüglich einer Längsbewegung (L) gegen die Montagebewegung (B) gegeneinander verriegelt.

3. Befestigungssystem (1) nach Anspruch 1 oder 2, **dadurch gekennzeichnet, dass** die Verriegelungsmechanik (8) eine Push-Push-Mechanik oder eine Herzkurvenmechanik ist.

4. Befestigungssystem (1) nach einem der vorhergehenden Ansprüche, **dadurch gekennzeichnet, dass** bei der Montagebewegung (B) die Gewindemutter (2) um die Mittelachse (M) verschwenkt wird, während die Lagerungseinheit (5) im Wesentlichen ausschliesslich entlang der Mittelachse (M) bewegt wird.

5. Befestigungssystem (1) nach einem der vorhergehenden Ansprüche, **dadurch gekennzeichnet, dass** die Gewindemutter (2) eine zylindrische sich um die Mittelachse (M) herum erstreckende Aussenwand (11) und das Antriebselement (6) einen Hohlraum (23) mit einer zylindrischen Innenwand (12) umfasst, wobei die Gewindemutter (2) mit ihrer Aussenwand (11) mindestens teilweise in den Hohlraum (23) einragt und wobei die Verriegelungsmechanik (8) im Bereich des Hohlraums (23) bzw. im Bereich der besagten Innenwand (12) und/oder der Aussenwand (11) angeordnet ist.

6. Befestigungssystem (1) nach Anspruch 5, **dadurch gekennzeichnet, dass** die Kurvenbahn (9) sich in die zylindrische Aussenwand (11) der Gewindemutter (2) hinein erstreckt und der Nocken (10) auf der Innenwand (12) des Antriebselementes (6) angeordnet ist; oder dass der Nocken (10) auf der zylindrischen Aussenwand (11) der Gewindemutter (2) und die Kurvenbahn (9) sich in die Innenwand (12) des Antriebselementes (6) hinein erstreckt.

7. Befestigungssystem (1) nach einem der vorhergehenden Ansprüche, **dadurch gekennzeichnet, dass** die Kurvenbahn (9) einen Einführabschnitt (13), einen Umschaltabschnitt (14) und einen Lagerungsabschnitt (15) aufweist, wobei der Nocken (10) beim Vorgang des Verbindens entlang der Montagebewegung (B) zuerst den Einführabschnitt (13) passiert und dann auf den Umschaltabschnitt (14) auftrifft, welcher die Gewindemutter (2) derart verschwenkt, dass bei einer Längsbewegung (L) der Lagerungseinheit (5) entgegen der Montagebewegung (M) der Nocken (10) in den Lagerungsabschnitt (15) zu liegen kommt.

8. Befestigungssystem (1) nach Anspruch 7, **dadurch gekennzeichnet, dass** der Einführabschnitt (13) seitlich durch zwei Führungsflächen (16) begrenzt ist, wobei der Abstand zwischen den zwei Führungsflächen (16) mit geringer werdendem Abstand zum Umschaltabschnitt (14) kleiner werden.

9. Befestigungssystem (1) nach Anspruch 8, **dadurch gekennzeichnet, dass** die Führungsflächen (16) von zwei benachbarten Kurvenbahnen (9) derart angeordnet sind, dass die besagten Führungsflächen (16) in einer Spitze (17) gegenüber dem Lagerungsabschnitt (15) zusammenlaufen.

10. Befestigungssystem (1) nach einem der vorhergehenden Ansprüche 7 bis 9, **dadurch gekennzeichnet, dass** bei einer Bewegung des Nockens (10) aus dem Lagerungsabschnitt (15) heraus in Richtung der Montagebewegung (B) der Nocken (10) auf einen weiteren Umschaltabschnitt (18) auftrifft, welcher in Zusammenarbeit mit dem Nocken (10) die Gewindemutter (2) weiter verschwenkt, so dass der Nocken (8) derart zum Einführabschnitt (13) liegt, dass dieser durch den Einführabschnitt (13) gegen die Montagerichtung (B) die Kurvenbahn (9) verlassen kann.

11. Befestigungssystem (1) nach einem der vorhergehenden Ansprüche, **dadurch gekennzeichnet, dass** mindestens zwei Kurvenbahnen (9) und mindestens zwei Nocken (10) angeordnet sind, wobei die Paarungen Kurvenbahn (9) und Nocken (10) vorzugsweise jeweils in gleichmässigen Abständen um den Umfang der Gewindemutter (2) verteilt angeordnet sind.

12. Befestigungssystem (1) nach Anspruch 10, **dadurch gekennzeichnet, dass** der Nocken (10) frontseitig in seiner Form passend zum Lagerungsabschnitt (15) ausgebildet ist und/oder dass der Nocken (10) rückseitig eine zur Mittelachse (M) winklig geneigte Führungsfläche (26) aufweist, welche mit dem Umschaltabschnitt (14) bzw. mit dem weiteren Umschaltabschnitt (18) zusammenarbeitet.

13. Befestigungssystem (1) nach einem der vorhergehenden Ansprüche, dadurch gekennzei chnet,
dass die Lagerungseinheit (5) weiter ein Gehäuse (19) umfasst, welches Teil des Aufnahmeelementes (7) ist, wobei das Antriebselement (6) um eine Drehachse (D) drehbar im Gehäuse (19) und bezüglich einer Längsbewegung entlang die Drehachse (D) fest im Gehäuse (19) gelagert ist, und/oder
dass das Antriebselement (6) durch ein Betätigungselement (20) mit einer Drehbewegung beaufschlagt wird, wobei zwischen Antriebselement (6) und Betätigungselement (20) vorzugsweise ein Zahngetriebe (21), insbesondere ein Kegelgetriebe, vorgesehen ist.

14. Befestigungssystem nach einem der vorhergehenden Ansprüche, **dadurch gekennzeichnet, dass** das Innengewinde sich nicht über die gesamte Länge der Gewindemutter erstreckt.

15. Verfahren zur Montage eines Sanitärartikels mit einem Befestigungssystem nach einem der vorhergehenden Ansprüche, **dadurch gekennzeichnet,**
**dass** in einem ersten Schritt die Gewindemutter (2) auf einer Gewindestange (4) platziert wird,
**dass** in einem zweiten Schritt die Lagerungseinheit (5) mit dem mit der Lagerungseinheit (5) in Verbindung stehenden Sanitärartikel entlang der Montagebewegung (B) über die Verrieglungsmechanik (8) mit der Gewindemutter (2) in Verbindung gebracht wird,
und **dass** in einem dritten Schritt über das Antriebselement (6) eine Drehbewegung auf die Gewindemutter (2) übertragen wird, wodurch die Lagerungseinheit (5) entlang der Gewindestange (4) bewegt wird und wodurch der Sanitärartikel gegen einen Anschlag, wie eine Wand, klemmbar ist.

16. Verfahren nach Anspruch 15 zur Montage eines Sanitärartikels mit einem Befestigungssystem nach einem der vorhergehenden Ansprüche 7 bis 14, **dadurch gekennzeichnet, dass** im zweiten Schritt während der Montagebewegung (B) der Nocken den Einführabschnitt (13) passiert und in Richtung der Montagebewegung gesehen gegenüber des Einführabschnittes (13) auf den Umschaltabschnitt (14) auftrifft und dann mittels einer Bewegung entgegen der Montagebewegung (B) in den Lagerungsabschnitt (15) zu liegen kommt.

## Claims

1. Fastening system (1) for a sanitary article, comprising a threaded nut (2) having an internal thread (3) extending around a central axis (M) for engagement with a threaded rod (4) and
a bearing unit (5) comprising a drive element (6) for actuating the threaded nut (2) and a receiving element (7) for receiving the sanitary article, wherein the drive element (6) acts on the threaded nut (2) and charges the threaded nut (2) with a rotational movement.
wherein the threaded nut (2) and the drive element (6) are connected to one another via a locking mechanism (8), wherein the locking mechanism (8) is designed so that through a fitting movement (B) of the bearing unit (5) in a direction of the central axis (M) a mechanical engagement can be produced without tools between the threaded nut (2) and the drive element (6), **characterized in that** the locking mechanism (8) comprises at least one curved path (9) and at least one cam (10) engaging in the curved path (9).

2. Fastening system (1) according to Claim 1, **characterized in that** said mechanical engagement locks the threaded nut (2) and the drive element (6) secured against rotation about the central axis (M) and/or that said mechanical engagement locks the threaded nut (2) and the drive element (6) with respect to a longitudinal movement (L) against the fitting movement (B).

3. Fastening system (1) according to Claim 1 or 2, **characterized in that** the locking mechanism (8) is a push-push mechanism or a cardioid mechanism.

4. Fastening system (1) according to one of the preceding Claims, **characterized in that** during the fitting movement (B) the threaded nut (2) is pivoted about the central axis (M), whilst the bearing unit (5) is moved substantially only along the central axis (M).

5. Fastening system (1) according to one of the preceding Claims, **characterized in that** the threaded nut (2) comprises a cylindrical outside wall (11) extending around the central axis (M) and the drive element (6) comprises a hollow space (23) with a cylindrical inside wall (12), wherein the threaded nut (2) projects with its outside wall (11) at least partly into the hollow space (23) and wherein the locking mechanism (8) is arranged in the region of the hollow space (23) or in the region of said inside wall (12) and/or the outside wall (11), respectively.

6. Fastening system (1) according to Claim 5, **characterized in that** the curved path (9) extends into the cylindrical outside wall (11) of the threaded nut (2) and the cam (10) is arranged on the inside wall (12) of the drive element (6); or that the cam (10) is arranged on the cylindrical outside wall (11) of the threaded nut (2), and the curved path (9) extends into the inside wall (12) of the drive element (6).

7. Fastening system (1) according to one of the preceding Claims, **characterized in that** the curved path (9) comprises an insert portion (13), a switch portion (14) and a bearing portion (15) wherein the cam (10) during the connection process along the fitting movement (B) first passes the insert portion (13) and then meets the switch portion (14) which pivots the threaded nut (2) so that during longitudinal movement (L) of the bearing unit (5) against the fitting movement (M) the cam (10) comes to lie in the bearing portion (15).

8. Fastening system (1) according to Claim 7, **characterized in that** the insert portion (13) is limited laterally by two guide faces (16) wherein the distance between the two guide faces (16) decreases as the distance to the switch portion (14) decreases.

9. Fastening system (1) according to Claim 8, **characterized in that** the guide faces (16) of two adjoining curved paths (9) are arranged so that said guide faces (16) converge in a tip (17) opposite the bearing portion (15).

10. Fastening system (1) according to one of the preceding Claims 7 to 9, **characterized in that** during movement of the cam (10) out of the bearing portion (15) in the direction of the fitting movement (B) the cam (10) meets a further switch portion (18) which in interaction with the cam (10) pivots the threaded nut (2) further so that the cam (8) lies with respect the insert portion (13) so that the cam can leave the curved path (9) through the insert portion (13) against the fitting direction (B).

11. Fastening system (1) according to one of the preceding Claims, **characterized in that** at least two curved paths (9) and at least two cams (10) are arranged wherein the pairs of cam path (9) and cam (10) are preferably each arranged at uniform spacings around the circumference of the threaded nut (2).

12. Fastening system (1) according to Claim 10, **characterized in that** the cam (10) is formed at the front with its shape matching the bearing portion (15) and/or that the cam (10) has at the back a guide face (26) which is inclined at an angle to the central axis (M) and which interacts with the switch portion (14) or with the further switch portion (18), respectively.

13. Fastening system (1) according to one of the preceding Claims, **characterized in that** the bearing unit (5) furthermore comprises a housing (19) which is part of the receiving element (7) wherein the drive element (6) is mounted in the housing (19) to rotate about an axis of rotation (D) and is mounted fixed in the housing (19) with respect to a longitudinal movement along the axis of rotation (D), and/or that the drive element (6) is charged with a rotational movement by an actuating element (20) , wherein a toothed gear (21), in particular a bevel gear, is preferably provided between drive element (6) and actuating element (20).

14. Fastening system according to one of the preceding Claims, **characterized in that** the internal thread does not extend over the entire length of the threaded nut.

15. Method for fitting a sanitary article using a fastening system according to one of the preceding Claims, **characterized in that** in a first step the threaded nut (2) is placed on a threaded rod (4), that in a second step the bearing unit (5) with the sanitary article connected to the bearing unit (5) is brought into connection with the threaded nut (2) via the locking mechanism (8) along the fitting movement (B), and that in a third step a rotational movement is transferred onto the threaded nut (2) via the drive element (6), whereby the bearing unit (5) is moved along the threaded rod (4) and whereby the sanitary article can be clamped against a stop, such as a wall.

16. Method according to Claim 15 for fitting a sanitary article with a fastening system according to one of the preceding Claims 7 to 14, **characterized in that** in the second step during the fitting movement (B) the cam passes the insert portion (13) and, when seen in the direction of the fitting movement, opposite the insert portion (13) meets the switch portion (14) and then by means of movement against the fitting movement (B) comes to lie in the bearing portion (15).

## Revendications

1. Système de fixation (1) pour un équipement sanitaire, comprenant
un écrou fileté (2) avec un filetage interne (3) s'étendant autour d'un axe médian (M) pour l'engagement avec une tige filetée (4) et
une unité de support sur palier (5) comprenant un élément d'entraînement (6) pour l'actionnement de l'écrou fileté (2) et un élément de réception (7) pour recevoir l'article sanitaire,
l'élément d'entraînement (6) agissant sur l'écrou fileté (2) et sollicitant l'écrou fileté (2) avec un mouvement de rotation,
l'écrou fileté (2) et l'élément d'entraînement (6) étant en liaison l'un avec l'autre par le biais d'un mécanisme de verrouillage (8), le mécanisme de verrouillage (8) étant réalisé de telle sorte que par un déplacement de montage (B) de l'unité de support sur palier (5) dans la direction de l'axe médian (M), un engagement mécanique sans outil puisse être établi entre l'écrou fileté (2) et l'élément d'entraînement (6), **caractérisé en ce que**
le mécanisme de verrouillage (8) comprend au moins une piste de came (9) et au moins une came (10) s'engageant dans la piste de came (9).

2. Système de fixation (1) selon la revendication 1, **caractérisé en ce que** ledit engagement mécanique verrouille l'écrou fileté (2) et l'élément d'entraînement (6) de manière solidaire en rotation autour de l'axe médian (M) et/ou **en ce que** ledit engagement mécanique verrouille l'un à l'autre l'écrou fileté (2) et l'élément d'entraînement (6) par rapport à un déplacement longitudinal (L) à l'encontre du déplacement de montage (B).

3. Système de fixation (1) selon la revendication 1 ou 2, **caractérisé en ce que** le mécanisme de verrouillage (8) est un mécanisme push-push ou un mécanisme à cardioïde.

4. Système de fixation (1) selon l'une quelconque des revendications précédentes, **caractérisé en ce que** lors du déplacement de montage (B), l'écrou fileté (2) est pivoté autour de l'axe médian (M) tandis que l'unité de support sur palier (5) est déplacée essentiellement exclusivement le long de l'axe médian (M).

5. Système de fixation (1) selon l'une quelconque des revendications précédentes, **caractérisé en ce que** l'écrou fileté (2) comprend une paroi extérieure cylindrique (11) s'étendant autour de l'axe médian (M) et l'élément d'entraînement (6) comprend une cavité (23) avec une paroi intérieure cylindrique (12), l'écrou fileté (2) pénétrant avec sa paroi extérieure (11) au moins en partie dans la cavité (23) et le mécanisme de verrouillage (8) étant disposé dans la région de la cavité (23) ou dans la région de ladite paroi intérieure (12) et/ou de la paroi extérieure (11).

6. Système de fixation (1) selon la revendication 5, **caractérisé en ce que** la piste de came (9) s'étend dans la paroi extérieure cylindrique (11) de l'écrou fileté (2) et la came (10) est disposée sur la paroi intérieure (12) de l'élément d'entraînement (6) ; ou **en ce que** la came (10) s'étend sur la paroi extérieure cylindrique (11) de l'écrou fileté (2) et la piste de came (9) s'étend dans la paroi intérieure (12) de l'élément d'entraînement (6).

7. Système de fixation (1) selon l'une quelconque des revendications précédentes, **caractérisé en ce que** la piste de came (9) présente une portion d'introduction (13), une portion de commutation (14) et une portion de support sur palier (15), la came (10), lors de l'opération de connexion le long du déplacement de montage (B), passant d'abord par la portion d'introduction (13) puis parvenant sur la portion de commutation (14) qui fait pivoter l'écrou fileté (2) de telle sorte que dans le cas d'un déplacement longitudinal (L) de l'unité de support sur palier (5) à l'encontre du déplacement de montage (M), la came (10) vienne se placer dans la portion de support sur palier (15).

8. Système de fixation (1) selon la revendication 7, **caractérisé en ce que** la portion d'introduction (13) est limitée latéralement par deux surfaces de guidage (16), la distance entre les deux surfaces de guidage (16) devenant plus petite avec la réduction de la distance à la portion de commutation (14).

9. Système de fixation (1) selon la revendication 8, **caractérisé en ce que** les surfaces de guidage (16) de deux pistes de came adjacente (9) sont disposées de telle sorte que lesdites surfaces de guidage (16) se réunissent en une pointe (17) en regard de la portion de support sur palier (15).

10. Système de fixation (1) selon l'une quelconque des revendications précédentes 7 à 9, **caractérisé en ce que** dans le cas d'un déplacement de la came (10) de la portion de support sur palier (15) dans la direction du déplacement de montage (B), la came (10) parvient sur une portion de commutation supplémentaire (18) qui, par coopération avec la came (10), fait pivoter l'écrou fileté (2) davantage de telle sorte que la came (8) parvienne jusqu'à la portion d'introduction (13) de telle sorte que celle-ci puisse quitter la piste de came (9) par la portion d'introduction (13) à l'encontre de la direction de montage (B).

11. Système de fixation (1) selon l'une quelconque des revendications précédentes, **caractérisé en ce qu'**au moins deux pistes de came (9) et au moins deux cames (10) sont prévues, les appariements de piste de came (9) et de came (10) étant de préférence répartis à chaque fois de manière équidistante autour de la périphérie de l'écrou fileté (2).

12. Système de fixation (1) selon la revendication 10, **caractérisé en ce que** la came (10) est réalisée du côté avant de manière ajustée par sa forme à la portion de support sur palier (15) et/ou **en ce que** la came (10) présente du côté arrière une surface de guidage (26) inclinée angulairement par rapport à l'axe médian (M), laquelle coopère avec la portion de commutation (14) ou avec la portion de commutation supplémentaire (18).

13. Système de fixation (1) selon l'une quelconque des revendications précédentes, **caractérisé en ce que** l'unité de support sur palier (5) comprend en outre un boîtier (19) qui fait partie de l'élément de réception (7), l'élément d'entraînement (6) étant supporté de manière à pouvoir tourner autour d'un axe de rotation (D) dans le boîtier (19) et étant supporté fixement dans le boîtier (19) par rapport à un déplacement longitudinal le long de l'axe de rotation (D), et/ou
**en ce que** l'élément d'entraînement (6) est sollicité par un élément d'actionnement (20) avec un mouvement de rotation, un engrenage à dents (21), en particulier un engrenage conique, étant de préférence prévu entre l'élément d'entraînement (6) et l'élément d'actionnement (20).

14. Système de fixation selon l'une quelconque des revendications précédentes, **caractérisé en ce que** le filetage interne ne s'étend pas sur toute la longueur de l'écrou fileté.

15. Procédé de montage d'un équipement sanitaire comprenant un système de fixation selon l'une quelconque des revendications précédentes, **caractérisé en ce que**
dans une première étape, l'écrou fileté (2) est placé sur une tige filetée (4),
dans une deuxième étape, l'unité de support sur palier (5) est amenée en liaison avec l'écrou fileté (2) au moyen de l'équipement sanitaire en liaison avec l'unité de support sur palier (5), le long du déplacement de montage (B) par le biais du mécanisme de verrouillage (8),
et dans une troisième étape, un mouvement de rotation est transmis à l'écrou fileté (2) par le biais de l'élément d'entraînement (6), de sorte que l'unité de support sur palier (5) soit déplacée le long de la tige filetée (4) et de sorte que l'équipement sanitaire puisse être serré contre une butée telle qu'une paroi.

16. Procédé selon la revendication 15 pour le montage d'un équipement sanitaire au moyen d'un système de fixation selon l'une quelconque des revendications précédentes 7 à 14, **caractérisé en ce que** dans la deuxième étape pendant le déplacement de montage (B), la came passe par la portion d'introduction (13) et, vu dans la direction du déplacement de montage, parvient sur la portion de commutation (14) en regard de la portion d'introduction (13) puis vient se placer dans la portion de support sur palier (15) au moyen d'un déplacement à l'encontre du déplacement de montage (B).
